# EUROPÄISCHE PATENTSCHRIFT

(11) **EP 2 667 002 B1**
(45) Veröffentlichungstag und Bekanntmachung des Hinweises auf die Patenterteilung: **17.02.2021**
(21) Anmeldenummer: 13168891.3
(22) Anmeldetag: 23.05.2013
(51) Int. Cl.: F02D 41/40, F02D 41/38

(54) **Verfahren und Vorrichtung zum Steuern einer Kraftstoffeinspritzung in einen Verbrennungsmotor**
Method and device for controlling fuel injection into an internal combustion engine
Procédé et dispositif de commande d'une injection de carburant dans un moteur à combustion

(30) Priorität: 26.05.2012 DE 102012010566
(43) Veröffentlichungstag der Anmeldung: 27.11.2013
(73) Patentinhaber: Volkswagen Aktiengesellschaft, 38440 Wolfsburg (DE)
(72) Erfinder: Birkigt, Dr. Andreas, 38442 Wolfsburg (DE)
(74) Vertreter: Gulde & Partner

(56) Entgegenhaltungen:
- EP-A1- 0 849 459
- DE-A1- 10 333 261
- DE-A1- 19 936 201
- DE-A1-102006 035 139
- DE-A1-102010 011 105

## Beschreibung

Die vorliegende Erfindung betrifft ein Verfahren und eine Vorrichtung zum Steuern einer Kraftstoffeinspritzung in einen Verbrennungsmotor, um insbesondere eine Vorentflammung in einem Brennraum des Verbrennungsmotors zu vermeiden.

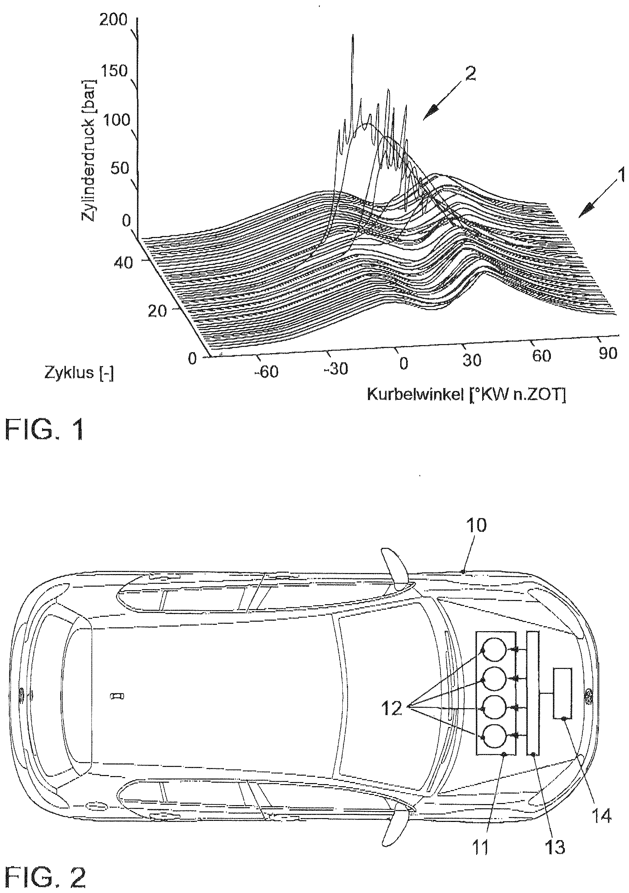

Bei Verbrennungsmotoren, wie sie beispielsweise bei Fahrzeugen, wie z. B. Personenkraftwagen oder Lastkraftwagen, verwendet werden, kennzeichnet der Begriff Vorentflammung unkontrollierte Zündprozesse einer Zylinderladung vor einem geplanten Zündzeitpunkt. Diese unkontrollierten Zündprozesse können mehr oder weniger deutlich vor dem geplanten Zündzeitpunkt auftreten. Durch die verfrühte Umsetzung des Luft-/Kraftstoffgemisches (Zylinderladung) und die zusätzliche Kompression des Kompressionstaktes des Verbrennungsmotors kann es zu sehr hohen Drücken im Zylinder kommen. Durch den erhöhten thermischen Zustand nach Brennbeginn bei der Vorentflammung kommt es häufig zu einer Detonation mit anschließender klopfender Verbrennung. Das Zusammentreffen dieser Bedingungen führt zu Zylinderdrücken, welche weit über die bei der Verbrennung üblicherweise auftretenden Zylinderdrücke hinausgehen. Beispielsweise können Zylinderdrücke von mehr als 250 bar bei einer Vorentflammung auftreten. Dies kann zu einem erhöhten Verschleiß oder Beschädigungen bis hin zum sofortigen Ausfall des Verbrennungsmotors führen. Eine Vorentflammung kann beispielsweise unter bestimmten Temperatur- und Druckvoraussetzungen im Zylinder und aufgrund von Verunreinigungen, beispielsweise Ablagerungen von Verbrennungsrückständen im Zylinder auftreten. Das Auftreten einer Vorentflammung kündigt sich im Allgemeinen in keiner Weise in den vorhergehenden Arbeitsspielen an. Einen Druckverlauf von Vorentflammungen im Gegensatz zu einem Druckverlauf einer regulären Verbrennung ist in Fig. 1 gezeigt. Die Graphen 1 zeigen Druckverläufe in dem Zylinder über einem Kurbelwellenwinkel bei verschiedenen Verbrennungszyklen ohne Vorentflammung und die Graphen 2 zeigen entsprechende Zylinderdruckverläufe über dem Kurbelwellenwinkel für Verbrennungszyklen mit Vorentflammung. Der dargestellte Kurbelwellenwinkelbereich umfasst einen Bereich von näherungsweise 90°KW vor dem oberen Totpunkt bis näherungsweise 90°KW nach dem oberen Totpunkt zwischen Kompressions- und Arbeitstakt. Die Einheit °KW steht für Grad Kurbelwinkel und bezeichnet eine entsprechende Kurbelwellenstellung.

Im Unterschied zur Glühzündung tritt die Vorentflammung nur unter bestimmten Voraussetzungen auf. Beispielsweise sind hohe Verdichtungstemperaturen erforderlich, um Vorreaktionen und im Anschluss eine Selbstzündung einzuleiten. Diese hohen Verdichtungstemperaturen können beispielsweise durch die Kombination aus hohen Verdichtungsverhältnissen und hohen Aufladegraden bei Turbomotoren erreicht werden. Zusätzlich wird eine ausreichende Zeitspanne für die Einleitung der Vorreaktionen und der Selbstzündung benötigt, wodurch Vorentflammungen verstärkt bei niedrigen bis mittleren Drehzahlen, beispielsweise in einem Bereich von 1500 bis 2500 Umdrehungen pro Minute auftreten. Im Zuge der Verkleinerung von Ottomotoren mit Hochaufladung kann bei besonders kritischen Bedingungen, wie z. B. schlechtem Kraftstoff und hohen Außentemperaturen, bei geringen Drehzahlen und hohen Motorlasten eine Vorentflammung auftreten.

In diesem Zusammenhang ist aus der Druckschrift DE 10 2009 008 247 B3 ein Verfahren zur Erkennung von Vorentflammungen bei einer Verbrennungskraftmaschine bekannt. Dabei wird auf der Grundlage von Signalen einer Abtastung eines Geberrades eine Folge von Winkelwerten der Kurbel- oder Nockenwelle der Verbrennungskraftmaschine bestimmt. Auf der Grundlage eines Vergleichs aufeinanderfolgender Winkelwerte erfolgt eine Erkennung von Vorentflammungen.

Die Druckschrift EP 0 849 459 A1 offenbart einen Verbrennungsmotor, der ein Kraftstoffeinspritzventil zum direkten Einspritzen von Kraftstoff in eine Brennkammer umfasst. Kraftstoff wird während eines Kompressionshubs in einem bestimmten Betriebsbereich unter einer mittleren bis hohen Last eingespritzt um eine geschichtete Verbrennung durchzuführen. Es sind Steuermittel vorgesehen, die zum Antreiben und Steuern des Kraftstoffeinspritzventils dienen. Bei der geschichteten Verbrennung wird vor der Kraftstoffeinspritzung während des Kompressionshubs Kraftstoff von dem Kraftstoffeinspritzventil derart eingespritzt, dass sich der Kraftstoff während eines Ansaugtakts nicht selbst entzündet.

Ferner beschreibt die Druckschrift DE 103 33 261 A1 ein Verfahren zum Betrieb eines direkt einspritzenden fremdgezündeten Verbrennungsmotors in einem mittleren Lastbereich mit einer Einrichtung zur Kraftstoffeinspritzung mittels eines Injektors in den Brennraum zumindest eines mit einem Einlassventil versehenen Zylinders des Motors, wobei zumindest zwei Einspritzereignisse pro Einspritzvorgang abgesetzt werden, wobei der Beginn des Einspritzvorgangs frühestens bei 400°KW vor dem oberen Totpunkt und der Beginn des letzten Einspritzereignisses spätestens bei 180°KW vor ZOT positioniert wird, sodass 70% der gesamten pro Einspritzungsvorgang eingespritzten Kraftstoffmenge bis zum Zeitpunkt 250°KW vor ZOT eingespritzt werden, wobei 70% der pro Einspritzvorgang eingespritzten Kraftstoffmenge im ersten Einspritzereignis eingespritzt werden können.

Aufgabe der vorliegenden Erfindung ist es, einen Verbrennungsmotor derart zu betreiben, dass Betriebsvoraussetzungen, welche für das Auftreten einer Vorentflammung erforderlich sind, zu vermeiden, und somit das Auftreten von Vorentflammungen zu verhindern.

Diese Aufgabe wird gemäß der vorliegenden Erfindung durch ein Verfahren zum Steuern einer Kraftstoffeinspritzung in einen Verbrennungsmotor nach Anspruch 1, eine Vorrichtung zum Steuern einer Kraftstoffeinspritzung in einen Verbrennungsmotor nach Anspruch 8 und ein Fahrzeug nach Anspruch 10 gelöst. Die abhängigen Ansprüche definieren bevorzugte und vorteilhafte Ausführungsformen der Erfindung.

Gemäß der vorliegenden Erfindung wird ein Verfahren zum Steuern einer Kraftstoffeinspritzung in einen Verbrennungsmotor bereitgestellt. Bei dem Verfahren wird eine erste Kraftstoffmenge in einen Brennraum eines Zylinders des Verbrennungsmotors während eines Ansaugtaktes des Zylinders eingespritzt. Weiterhin wird eine zweite Kraftstoffmenge in Teilkraftstoffmengen in den Brennraum während eines Kompressionstaktes des Zylinders eingespritzt.

Durch das frühe Einspritzen der ersten Kraftstoffmenge während des Ansaugtaktes kann eine gute Vergasung und Verteilung des Kraftstoffs in dem Brennraum erreicht werden, wodurch eine zuverlässige Zündung des Kraftstoff-Luftgemisches in dem Brennraum sichergestellt werden kann.

Durch Einspritzen der zweiten Kraftstoffmenge in den Teilkraftstoffmengen während des Kompressionstaktes kann die Temperatur des Luft-Brennstoffgemisches in dem Brennraum aufgrund der für die Vergasung des Kraftstoffs benötigten Verdampfungswärme verringert werden. Dadurch können Vorreaktionen einer Vorentflammung vermieden werden, wodurch die Vorentflammung insgesamt verhindert werden kann.

Das Einspritzen der zweiten Kraftstoffmenge in den Brennraum umfasst ein Einspritzen einer ersten Teilkraftstoffmenge und einer zweiten Teilkraftstoffmenge.

Die erste Teilkraftstoffmenge wird vorzugsweise zu Beginn oder in der ersten Hälfte des Kompressionstaktes eingespritzt und die zweite Teilkraftstoffmenge in einem mittleren Bereich des Kompressionstaktes eingespritzt. Durch die erste Teilkraftstoffmenge kann die Zündfähigkeit des Luft-Kraftstoff-Gemisches in dem Brennraum weiter verbessert werden. Die zweite Teilkraftstoffmenge trägt dazu bei, die Temperatur des Luft-Kraftstoff-Gemisches in dem Brennraum zu verringern, indem durch die Verdampfung der zweiten Teilkraftstoffmenge dem Luft-Kraftstoff-Gemisch Verdampfungswärme entzogen wird. Darüber hinaus kann durch die somit dreigeteilte Kraftstoffeinspritzung (Dreifacheinspritzung) eine Benetzung von Innenwandflächen mit Kraftstoff verringert werden und eine günstige Verteilung des inhomogenen Kraftstoff-Luftgemisches beeinflusst werden. Weiterhin kann eine gesamte Ladungsbewegung und eine turbulente-kinetische-Energie beeinflusst werden. Dadurch kann die Vorentflammungsneigung verringert werden und somit die Vorentflammungshäufigkeit deutlich abgesenkt werden.

Die Einspritzung der ersten Kraftstoffmenge beginnt in einem Kurbelwellenwinkelbereich von 270°KW - 320°KW, vorzugsweise 280°KW - 290°KW, vor einem oberen Totpunkt des Zylinders.

Bevorzugt liegt das Einspritzende der ersten Teilkraftstoffmenge in einem Kurbelwellenwinkelbereich von 110°KW - 150°KW, vorzugsweise 120°KW - 150°KW und insbesondere bei einem Kurbelwellenwinkel von 135°KW vor einem oberen Totpunkt des Zylinders. Das Einspritzende für die zweite Teilkraftstoffmenge liegt in einem Kurbelwellenwinkelbereich von 80°KW-110°KW, vorzugsweise 80°KW - 100°KW und insbesondere bei einem Kurbelwellenwinkel von 90°KW vor dem oberen Totpunkt des Zylinders. Der obere Totpunkt des Zylinders betrifft einen oberen Totpunkt zwischen einem Kompressionstakt und einem Arbeitstakt des Verbrennungsmotors. Die zuvor genannten Kurbelwellenwinkelbereiche zum Einspritzen der ersten Kraftstoffmenge, der ersten Teilkraftstoffmenge und der zweiten Teilkraftstoffmenge sind das Ergebnis umfangreicher Untersuchungen und haben sich zur Minimierung der Vorentflammungshäufigkeit bei Drehzahlen unter 3000 Umdrehungen pro Minute und hohen Motorlasten als optimal erwiesen.

Erfindungsgemäß ist eine Gesamtkraftstoffmenge für einen Verbrennungszyklus eines Zylinders vorgesehen. Die zuzumessenden Kraftstoffmengen der Einzeleinspritzungen betragen jeweils 30-35% der Gesamtkraftstoffmenge der Dreifacheinspritzung. Bei den zuvor genannten Untersuchungen haben sich die so aufgeteilten Kraftstoffmengen ebenfalls als die optimal zur Minimierung der Vorentflammungshäufigkeit erwiesen.

Das zuvor beschriebene Verfahren wird in bestimmten Betriebsbereichen des Verbrennungsmotors durchgeführt, die durch die Drehzahlen pro Minute und eine hohe Motorlast definiert sind.

Ein bestimmter Betriebsbereich kann beispielsweise ein Betriebsbereich sein, in welchem eine Drehzahl des Verbrennungsmotors maximal 3000 Umdrehungen pro Minute beträgt und die Last des Verbrennungsmotors beispielsweise mindestens 75 % einer Maximallast des Verbrennungsmotors bei einer aktuellen Drehzahl beträgt.

Ein anderer bestimmter Betriebsbereich kann insbesondere ein Betriebsbereich des Verbrennungsmotors sein, in welchem der Motor eine Drehzahl im Bereich von 1000 bis 3000 Umdrehungen pro Minute aufweist und ein effektiver Mitteldruck in den Zylindern des Verbrennungsmotors von mindestens 14 bar herrscht.

In den zuvor beschriebenen Betriebsbereichen treten Vorentflammungen besonders häufig auf.

Daher ist insbesondere die Eispritzung des Kraftstoffs gemäß dem zuvor beschriebenen Verfahren in diesen Betriebsbereichen sinnvoll, um eine Vorentflammungshäufigkeit zu verringern und somit den Verbrennungsmotor vor einem erhöhten Verschleiß oder Beschädigungen zu schützen. Der Verbrennungsmotor kann insbesondere ein Ottoverbrennungsmotor sein, welcher mit Benzin oder Super-Benzin betrieben wird. Weiterhin kann der Verbrennungsmotor ein Turbo aufgeladener Verbrennungsmotor mit Direkteinspritzung sein, welcher einen Hubraum im Bereich von beispielsweise 1 bis 1,4 Litern umfasst.

Gemäß der vorliegenden Erfindung wird weiterhin eine Vorrichtung zum Steuern einer Kraftstoffeinspritzung in einen Verbrennungsmotor bereitgestellt. Die Vorrichtung ist in der Lage, eine erste Kraftstoffmenge in einen Brennraum eines Zylinders des Verbrennungsmotors während eines Ansaugtaktes des Zylinders einzuspritzen und eine zweite Kraftstoffmenge in Teilkraftstoffmengen in den Brennraum während eines Kompressionstaktes des Zylinders einzuspritzen. Die Vorrichtung kann ferner zur Durchführung des zuvor beschriebenen Verfahrens ausgestaltet sein und umfasst daher auch die zuvor beschriebenen Vorteile.

Gemäß der vorliegenden Erfindung wird schließlich ein Fahrzeug bereitgestellt, welches einen Verbrennungsmotor und die zuvor beschriebene Vorrichtung umfasst. Durch das mit der Vorrichtung realisierte Kraftstoffeinspritzverfahren kann eine Vorentflammungshäufigkeit in dem Verbrennungsmotor wirksam minimiert werden, wodurch ein Verschleiß und eine Beschädigung des Verbrennungsmotors verhindert werden können.

Die vorliegende Erfindung wird nachfolgend unter Bezugnahme auf die Zeichnung im Detail erläutert werden.
Fig. 1 zeigt Zylinderdruckverläufe mit Vorentflammungen.
Fig. 2 zeigt ein Fahrzeug mit einer Vorrichtung zum Steuern einer Kraftstoffeinspritzung gemäß einer Ausführungsform der vorliegenden Erfindung.

Fig. 2 zeigt ein Fahrzeug 10 mit einem Verbrennungsmotor 11, einer Einspritzanlage 13 und einer Vorrichtung 14 zum Steuern der Einspritzanlage 13. Der Verbrennungsmotor 11 weist vier Zylinder 12 auf, in welche Kraftstoff unter der Steuerung der Vorrichtung 14 mittels der Kraftstoffeinspritzanlage 13 eingespritzt werden kann. Die Kraftstoffeinspritzanlage 13 kann Einspritzventile umfassen, welche beispielsweise elektrisch angesteuert werden können, um Kraftstoff direkt in einen Brennraum der Zylinder 12 einzuspritzen. Der Verbrennungsmotor 11 kann weiterhin einen Turbolader umfassen, um die dem Verbrennungsmotor 11 zugeführte Verbrennungsluft zu verdichten.

Die Einstellung von für das Brennverfahren des Verbrennungsmotors relevanten Aktuatoren, beispielsweise einen Einspritzzeitpunkt, einen Kraftstoffdruck, Steuerzeiten der Nockenwelle oder einen Zündzeitpunkt, erfolgt im Allgemeinen im Hinblick auf eine Reduzierung des Kraftstoffverbrauchs und der Abgas- und Geräuschemissionen. Zusätzlich muss sichergestellt werden, dass es im gesamten Kennfeldbereich des Verbrennungsmotors nicht zu klopfenden Verbrennungen kommt. Im Zuge der Verkleinerung der Ottomotoren mit Hochaufladung, einem sog. Down-Sizing von Ottomotoren, kann es bei besonders kritischen Bedingungen, wie beispielsweise einem schlechten Kraftstoff oder hohen Außentemperaturen, bei geringen oder mittleren Motordrehzahlen und hohen Motorlasten zu sog. Vorentflammungen kommen. Dabei entzündet sich das Kraftstoff-Luftgemisch in dem Zylinder 12 bereits deutlich vor dem geplanten Zündzeitpunkt an beispielsweise besonders heißen Stellen im Brennraum oder an in dem Brennraum angeordneten Verbrennungsrückständen.

Zur Vermeidung von Vorentflammungen wird daher von der Vorrichtung 14 eine Dreifacheinspritzung durchgeführt. Bei der Dreifacheinspritzung wird die einem Zylinder 12 zugemessene Kraftstoffmenge in Form von drei Einzeleinspritzungen nacheinander eingespritzt. Die Bestimmung der optimalen Dreifacheinspritzung zur Vermeidung von Vorentflammungen erfordert ein umfassendes Verständnis über Auslösemechanismen der Vorentflammung und eine geeignete Messprozedur, um das sporadische Auftreten der Vorentflammung zu bewerten. Mit einer Messprozedur für die Bewertung von Einspritzeitabläufen auf die Vorentflammungshäufigkeit wurden unterschiedliche Einspritzzeitabläufe untersucht. Vorentflammungen treten verhältnismäßig selten und sporadisch auf. Der reguläre Motorbetrieb läuft demzufolge im Allgemeinen ohne Vorentflammungen ab. Dennoch sind Vorentflammungen äußert schädlich für die Motorhaltbarkeit.

Folgende Einflussfaktoren auf die Vorentflammungsneigung können durch eine Anwendung unterschiedlicher Einspritzzeitabläufe der Dreifacheinspritzung beeinflusst werden: eine Benetzung von Zylinderinnenwänden mit Kraftstoff, eine Kühlung des Kraftstoff-Luft-Gemisches durch Verdampfungsenthalpie, eine Rußzahl, eine Verteilung des inhomogenen Kraftstoff-Luft-Gemisches, ein Zündwinkel sowie eine Ladungsbewegung innerhalb des Zylinders und eine turbulente-kinetische-Energie. Unter Optimierung dieser Einflussfaktoren und unter Berücksichtigung des Kraftstoffverbrauches, der Laufruhe und der Motoremissionen wurden unterschiedliche Einspritzstrategien untersucht und dabei haben sich folgende Einspritzungen für Drehzahlen bis 3000 Umdrehungen pro Minute als optimal erwiesen. Ein Beginn einer Einspritzung der ersten Kraftstoffmenge liegt demzufolge in einem Kurbelwellenwinkelbereich von 270°KW - 320°KW vor einem oberen Totpunkt des Zylinders, insbesondere in einem Kurbelwellenwinkelbereich von 280°KW - 290°KW. Ein Ende einer Einspritzung für die zweite Kraftstoffmenge liegt in einem Kurbelwellenwinkelwellenbereich von 110°KW - 150°KW vor dem oberen Totpunkt des Zylinders, vorzugsweise in einem Kurbelwellenwinkelbereich von 120°KW - 150°KW vor dem oberen Totpunkt des Zylinders, beispielsweise bei einem Kurbelwellenwinkel von 135°KW Ein Ende der Einspritzung für die dritte Kraftstoffmenge liegt in einem Kurbelwellenwinkelbereich von 80°KW - 110°KW, vorzugsweise 80°KW - 100°KW, beispielsweise bei einem Kurbelwellenwinkel von 90°KW. Ein Einspritzbeginn für die zweite Kraftstoffmenge und die dritte Kraftstoffmenge (welche in den Ansprüchen als erste Teilkraftstoffmenge und bzw. zweite Teilkraftstoffmenge bezeichnet werden), ergibt sich aus der geplanten Einspritzmenge, dem Einspritzdruck und einem Durchsatz eines Einspritzventils des Zylinders. Die Einspritzmengen der ersten bis dritten Einspritzung betragen näherungsweise jeweils 1/3 einer für einen Verbrennungszyklus des Zylinders vorgesehenen Gesamtkraftstoffmenge. Erfindungsgemäß umfasst die erste Kraftstoffmenge 30 - 35 % der Gesamtkraftstoffmenge, die zweite Kraftstoffmenge 30 - 35 % der Gesamtkraftstoffmenge und die dritte Kraftstoffmenge auch 30 bis 35 % der Gesamtkraftstoffmenge.

Die zuvor beschriebene Dreifacheinspritzung ist insbesondere zur gezielten Vermeidung von Vorentflammungen bei hochaufgeladenen Ottomotoren geeignet, welche dementsprechend kleine Hubräume von beispielsweise 1 bis 1,5 Liter aufweisen. Da die Vorentflammungen hauptsächlich in einem unteren und mittleren Drehzahlenbereich von beispielsweise 1000 bis 3000 Umdrehungen pro Minute und bei hoher Last oder Volllast auftreten, also beispielsweise bei einem effektiven Mitteldruck von 14 bar oder mehr, wird das zuvor beschriebene Verfahren der Dreifacheinspritzung, insbesondere in diesem Betriebsbereich des Verbrennungsmotors eingesetzt. Erfidnungsgemäß wird das zuvor beschriebene Verfahren der Dreifacheinspritzung entweder im Drehzahlenbereich bis maximal 3000 Umdrehungen pro Minute oder im Drehzahlenbereich von 1000 bis 3000 Umdrehungen pro Minute jeweils bei hoher Last eingesetzt. In anderen Betriebsbereichen, d.h., beispielsweise im Leerlauf oder bei Drehzahlen über 3000 Umdrehungen pro Minute oder im Teillastbereich, kann der Verbrennungsmotor mit Einspritzfolgen und Einspritzzeitabläufen betrieben werden, welche im Hinblick auf die Reduzierung des Kraftstoffverbrauchs, der Abgas- und Geräuschemissionen oder der Laufruhe des Fahrzeugs optimiert sind.

## Patentansprüche

1. Verfahren zum Steuern einer Kraftstoffeinspritzung in einen Verbrennungsmotor als Dreifacheinspritzung umfassend drei nacheinander erfolgende Einzeleinspritzungen,
- einem ersten Einspritzen einer ersten Kraftstoffmenge in einen Brennraum eines Zylinders (12) des Verbrennungsmotors (11) während eines Ansaugtakts des Zylinders (12), und
- einem zweiten und dritten Einspritzen einer in eine erste und zweite Teilkraftstoffmenge aufgeteilten zweiten Kraftstoffmenge in den Brennraum, während eines Kompressionstakts des Zylinders (12), sobald Drehzahlen bis maximal 3000 Umdrehungen pro Minute oder Drehzahlen von 1000 bis 3000 Umdrehungen pro Minute und eine hohe Motorlast erreicht sind, wodurch bestimmte Betriebsbereiche definiert sind,
- wobei die zuzumessenden Kraftstoffmengen der Einzeleinspritzungen jeweils 30 bis 35% der Gesamtkraftstoffmenge der Dreifacheinspritzung betragen, und
- ein Einspritzbeginn der ersten Kraftstoffmenge im Ansaugtakt zwischen 270 und 320° KW und ein Einspritzende der zweiten Teilkraftstoffmenge in einem Kurbelwellenwinkelbereich von 80 bis 110° KW vor einem oberen Totpunkt des Zylinders (12) liegt.

2. Verfahren nach Anspruch 1, wobei ein Einspritzende für die erste Teilkraftstoffmenge des zweiten Einspritzens in einem Kurbelwellenwinkelbereich von 110 bis 150° KW vor dem oberen Totpunkt des Zylinders (12) liegt.

3. Verfahren nach Anspruch 1, wobei
- ein Einspritzbeginn für die erste Kraftstoffmenge des ersten Einspritzens in einem Kurbelwellenwinkelbereich von 280 bis 290° KW vor einem oberen Totpunkt des Zylinders (12) liegt,
- ein Einspritzende für die erste Teilkraftstoffmenge des zweiten Einspritzens in einem Kurbelwellenwinkelbereich von 120 bis 150° KW vor dem oberen Totpunkt des Zylinders (12) liegt, und
- ein Einspritzende für die zweite Teilkraftstoffmenge des dritten Einspritzens in einem Kurbelwellenwinkelbereich von 80 bis 100° KW vor dem oberen Totpunkt des Zylinders (12) liegt.

4. Verfahren nach Anspruch 1, wobei
- ein Einspritzbeginn für die erste Kraftstoffmenge des ersten Einspritzens in einem Kurbelwellenwinkelbereich von 280 bis 290° KW vor einem oberen Totpunkt des Zylinders (12) liegt,
- ein Einspritzende für die erste Teilkraftstoffmenge des zweiten Einspritzens bei einem Kurbelwellenwinkel von 135°KW vor dem oberen Totpunkt des Zylinders (12) liegt, und
- ein Einspritzende für die zweite Teilkraftstoffmenge des dritten Einspritzens bei einem Kurbelwellenwinkel von 90°KW vor dem oberen Totpunkt des Zylinders (12) liegt.

5. Verfahren nach Anspruch 1, wobei die bestimmten Betriebsbereiche eine Last des Verbrennungsmotors (11) von mindestens 75% einer Maximallast des Verbrennungsmotors (11) aufweisen.

6. Verfahren nach Anspruch 1, wobei die bestimmten Betriebsbereiche durch einen effektiven Mitteldruck in dem Zylinder (12) von mindestens 14 bar gekennzeichnet sind.

7. Verfahren nach einem der vorhergehenden Ansprüche, wobei der Verbrennungsmotor (11) ein Benzinverbrennungsmotor ist.

8. Vorrichtung zum Steuern einer Kraftstoffeinspritzung in einen Verbrennungsmotor (11) als Dreifacheinspritzung umfassend drei nacheinander erfolgende Einzeleinspritzungen, wobei die Vorrichtung (14) ausgestaltet ist,
- eine erste Kraftstoffmenge in einem ersten Einspritzen in einen Brennraum eines Zylinders (12) des Verbrennungsmotors (11) während eines Ansaugtakts des Zylinders (12) einzuspritzen, und
- eine erste und zweite Teilkraftstoffmenge in einem zweiten und dritten Einspritzen einer aufgeteilten zweiten Kraftstoffmenge in den Brennraum während eines Kompressionstakts des Zylinders (12) einzuspritzen, sobald Drehzahlen bis maximal 3000 Umdrehungen pro Minute oder Drehzahlen von 1000 bis 3000 Umdrehungen pro Minute und eine hohe Motorlast erreicht sind, wodurch bestimmte Betriebsbereiche definiert sind,
- wobei die zuzumessenden Kraftstoffmengen der Einzeleinspritzungen jeweils 30 bis 35% der Gesamtkraftstoffmenge der Dreifacheinspritzung betragen, und
- ein Einspritzbeginn der ersten Kraftstoffmenge im Ansaugtakt zwischen 270 und 320° KW und ein Einspritzende der zweiten Teilkraftstoffmenge in einem Kurbelwellenwinkelbereich von 80 bis 110° KW vor einem oberen Totpunkt des Zylinders (12) liegt.

9. Vorrichtung nach Anspruch 8, wobei die Vorrichtung (14) zur Durchführung des Verfahrens nach einem der Ansprüche 2 bis 7 ausgestaltet ist.

10. Fahrzeug umfassend:
- einen Verbrennungsmotor (11) und
- eine Vorrichtung (14) nach Anspruch 8 oder 9.

## Claims

1. Method for controlling fuel injection into an internal combustion engine as triple injection comprising three sequentially occurring individual injections,
- a first injection of a first fuel quantity into a combustion chamber of a cylinder (12) of the internal combustion engine (11) during an intake stroke of the cylinder (12), and
- a second and third injection of a second quantity of fuel divided into a first and second partial fuel quantity into the combustion chamber during a compression stroke of the cylinder (12) as soon as rotational speeds up to a maximum of 3000 revolutions per minute or rotational speeds of 1000 to 3000 revolutions per minute and a high engine load are reached, whereby certain operating ranges are defined,
- wherein the fuel quantities of the individual injections to be measured are in each case 30 to 35% of the total fuel quantity of the triple injection, and
- a start of injection of the first fuel quantity in the intake stroke lies between 270 and 320° CA and an end of injection of the second partial fuel quantity lies within a crankshaft angle range of 80 to 110° CA before top dead center of the cylinder (12).

2. Method according to Claim 1, wherein
an end of injection for the first partial fuel quantity of the second injection lies within a crankshaft angle range of 110 to 150° CA before top dead center of the cylinder (12).

3. Method according to Claim 1, wherein
- a start of injection for the first fuel quantity of the first injection lies within a crankshaft angle range of 280 to 290° CA before top dead center of the cylinder (12),
- an end of injection for the first partial fuel quantity of the second injection lies within a crankshaft angle range of 120 to 150° CA before top dead center of the cylinder (12), and
- an end of injection for the second partial fuel quantity of the third injection lies within a crankshaft angle range of 80 to 100° CA before top dead center of the cylinder (12).

4. Method according to Claim 1, wherein
- a start of injection for the first fuel quantity of the first injection lies within a crankshaft angle range of 280 to 290° CA before top dead center of the cylinder (12),
- an end of injection for the first partial fuel quantity of the second injection lies at a crankshaft angle of 135° CA before top dead center of the cylinder (12), and
- an end of injection for the second partial fuel quantity of the third injection lies at a crankshaft angle of 90° CA before the top dead center of the cylinder (12).

5. Method according to Claim 1, wherein the determined operating ranges have a load of the internal combustion engine (11) of at least 75% of a maximum load of the internal combustion engine (11).

6. Method according to Claim 1, wherein the determined operating ranges are **characterized by** an effective medium pressure in the cylinder (12) of at least 14 bar.

7. Method according to any one of the preceding claims, wherein the internal combustion engine (11) is a gasoline engine.

8. Device for controlling fuel injection into an internal combustion engine (11) as triple injection comprising three sequentially occurring individual injections, wherein the device (14) is designed:
- to inject a first quantity of fuel in a first injection into a combustion chamber of a cylinder (12) of the internal combustion engine (11) during an intake stroke of the cylinder (12), and
- to inject a first and a second partial fuel quantity of a second fuel quantity divided into in a second and third injection into the combustion chamber during a compression stroke of the cylinder (12) as soon as rotational speeds of up to a maximum of 3000 revolutions per minute or rotational speeds of 1000 to 3000 revolutions per minute and a high engine load are reached, whereby certain operating ranges are defined,
- wherein the fuel quantities of the individual injections to be measured are in each case 30 to 35% of the total fuel quantity of the triple injection, and
- a start of injection of the first fuel quantity in the intake stroke lies between 270 and 320° CA and an end of injection of the second partial fuel quantity lies within a crankshaft angle range of 80 to 110° CA before top dead center of the cylinder (12).

9. Device according to Claim 8, wherein the device (14) is designed to carry out the method according to any one of Claims 2 to 7.

10. Vehicle comprising:
- an internal combustion engine (11) and
- a device (14) according to Claims 8 or 9.

## Revendications

1. Procédé de commande d'une injection de carburant dans un moteur à combustion, sous forme d'injection triple, comprenant trois injections effectuées les unes après les autres,
- une première injection d'une première quantité de carburant dans une chambre de combustion d'un cylindre (12) du moteur à combustion (11) pendant un temps d'aspiration du cylindre (12) et
- une deuxième et une troisième injections d'une deuxième quantité de carburant répartie en une première et une deuxième quantités partielles de carburant dans la chambre de combustion, pendant un temps de compression du cylindre (12), dès que les vitesses de rotation jusqu'à 3 000 rotations par minute maximum ou de 1 000 à 3 000 rotations par minute et une charge élevée du moteur sont atteintes, moyennant quoi des plages de fonctionnement déterminées sont définies,
- dans lequel les quantités de carburant à mesurer des injections uniques constituent respectivement de 30 à 35 % de la quantité de carburant totale de l'injection triple et
- un début d'injection de la première quantité de carburant dans le temps d'aspiration a lieu entre 270 et 320 KW et une fin d'injection de la deuxième quantité partielle de carburant a lieu dans une plage angulaire de vilebrequin allant de 80 à 110 KW avant un point mort haut du cylindre (12).

2. Procédé selon la revendication 1, dans lequel
une fin d'injection pour la première quantité partielle de carburant de la deuxième injection a lieu dans une plage angulaire de vilebrequin allant de 110 à 150 KW avant le point mort haut du cylindre (12).

3. Procédé selon la revendication 1, dans lequel
- un début d'injection pour la première quantité de carburant de la première injection a lieu dans une plage angulaire de vilebrequin allant de 280 à 290 KW avant un point mort haut du cylindre (12),
- une fin d'injection pour la première quantité partielle de carburant de la deuxième injection a lieu dans une plage angulaire de vilebrequin allant de 120 à 150 KW avant le point mort haut du cylindre (12) et
- une fin d'injection pour la deuxième quantité partielle de carburant de la troisième injection a lieu dans une plage angulaire de vilebrequin allant de 80 à 100 KW avant le point mort haut du cylindre (12).

4. Procédé selon la revendication 1, dans lequel
- un début d'injection pour la première quantité de carburant de la première injection a lieu dans une plage angulaire de vilebrequin allant de 280 à 290 KW avant un point mort haut du cylindre (12),
- une fin d'injection pour la première quantité partielle de carburant de la deuxième injection a lieu à un angle de vilebrequin de 135°KW avant le point mort haut du cylindre (12) et
- une fin d'injection pour la deuxième quantité partielle de carburant de la troisième injection a lieu à un angle de vilebrequin de 90°KW avant le point mort haut du cylindre (12).

5. Procédé selon la revendication 1, dans lequel les plages de fonctionnement déterminées présentent une charge du moteur à combustion (11) d'au moins 75 % d'une charge maximale du moteur à combustion (11).

6. Procédé selon la revendication 1, dans lequel les plages de fonctionnement déterminées sont **caractérisées par** une pression intermédiaire efficace dans le cylindre (12) d'au moins 14 bar.

7. Procédé selon l'une quelconque des revendications précédentes, dans lequel le moteur à combustion (11) est un moteur à combustion à essence.

8. Dispositif de commande d'une injection de carburant dans un moteur à combustion (11), sous forme d'injection triple, comprenant trois injections effectuées les unes après les autres, le dispositif (14) étant conçu pour
- injecter une première quantité de carburant dans une première injection dans une chambre de combustion d'un cylindre (12) du moteur à combustion (11) pendant un temps d'aspiration du cylindre (12) et
- injecter une première et une deuxième quantités partielles de carburant dans une deuxième et une troisième injections d'une deuxième quantité de carburant répartie dans la chambre de combustion, pendant un temps de compression du cylindre (12), dès que les vitesses de rotation jusqu'à 3 000 rotations par minute maximum ou de 1 000 à 3 000 rotations par minute et une charge élevée du moteur sont atteintes, moyennant quoi des plages de fonctionnement déterminées sont définies,
- dans lequel les quantités de carburant à mesurer des injections uniques constituent respectivement de 30 à 35 % de la quantité de carburant totale de l'injection triple et
- un début d'injection de la première quantité de carburant dans le temps d'aspiration a lieu entre 270 et 320 KW et une fin d'injection de la deuxième quantité partielle de carburant a lieu dans une plage angulaire de vilebrequin allant de 80 à 110 KW avant un point mort haut du cylindre (12).

9. Dispositif selon la revendication 8, dans lequel le dispositif (14) est conçu pour exécuter le procédé selon l'une quelconque des revendications 2 à 7.

10. Véhicule comprenant :
- un moteur à combustion (11) et
- un dispositif (14) selon la revendication 8 ou 9.
